(19) Europäisches Patentamt
European Patent Office
Office européen des brevets

(11) **EP 3 918 703 B1**

(12) **FASCICULE DE BREVET EUROPEEN**

(45) Date de publication et mention
de la délivrance du brevet:
**16.07.2025   Bulletin 2025/29**

(21) Numéro de dépôt: **20701218.8**

(22) Date de dépôt: **27.01.2020**

(51) Classification Internationale des Brevets (IPC):
**H02M 3/158** (2006.01)    **H02M 1/00** (2006.01)

(52) Classification Coopérative des Brevets (CPC):
**H02M 3/1584; H02M 1/0003; H02M 3/1586**

(86) Numéro de dépôt international:
**PCT/EP2020/051898**

(87) Numéro de publication internationale:
**WO 2020/156987 (06.08.2020 Gazette 2020/32)**

(54) **PROCÉDÉ DE COMMANDE D'UN CONVERTISSEUR BOOST À N CELLULES DE COMMUTATION**

STEUERVERFAHREN EINES BOOST-WANDLER MIT N WANDLERZELLEN

CONTROL METHOD OF A BOOST CONVERTER HAVING N COMMUTATION CELLS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **31.01.2019   FR 1900957**

(43) Date de publication de la demande:
**08.12.2021   Bulletin 2021/49**

(73) Titulaire: **Ampere SAS**
**92100 Boulogne-Billancourt (FR)**

(72) Inventeurs:
• **MALOUM, Abdelmalek**
**94550 Chevilly Larue (FR)**
• **ROUHANA, Najib**
**91300 Massy (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
• RENAUDINEAU HUGUES ET AL: "Efficiency Optimization Through Current-Sharing for Paralleled DC-DC Boost Converters With Parameter Estimation", IEEE TRANSACTIONS ON POWER ELECTRONICS, INSTITUTE OF ELECTRICAL AND ELECTRONICS ENGINEERS, USA, vol. 29, no. 2, 1 February 2014 (2014-02-01), pages 759 - 767, XP011524662, ISSN: 0885-8993, [retrieved on 20130820], DOI: 10.1109/ TPEL.2013.2256369
• GAVAGSAZ-GHOACHANI ROGHAYEH ET AL: "Control of a Two-Phase Interleaved Boost Converter with Input LC Filter for Fuel Cell Vehicle Applications", 2017 IEEE VEHICLE POWER AND PROPULSION CONFERENCE (VPPC), IEEE, 11 December 2017 (2017-12-11), pages 1 - 5, XP033344236, DOI: 10.1109/ VPPC.2017.8330973
• PHATIPHAT THOUNTHONG ET AL: "Intelligent Model-Based Control of a Standalone Photovoltaic/Fuel Cell Power Plant With Supercapacitor Energy Storage", IEEE TRANSACTIONS ON SUSTAINABLE ENERGY, IEEE, USA, vol. 4, no. 1, 1 January 2013 (2013-01-01), pages 240 - 249, XP011479440, ISSN: 1949-3029, DOI: 10.1109/ TSTE.2012.2214794

EP 3 918 703 B1

**Description**

La présente invention se rapporte à un procédé de commande d'un convertisseur de type *Boost à* N cellules de commutation.

L'invention concerne un convertisseur DC/DC de type Boost, connu en anglais sous le nom de *Step-Up,* qui est un convertisseur élévateur de tension continue.

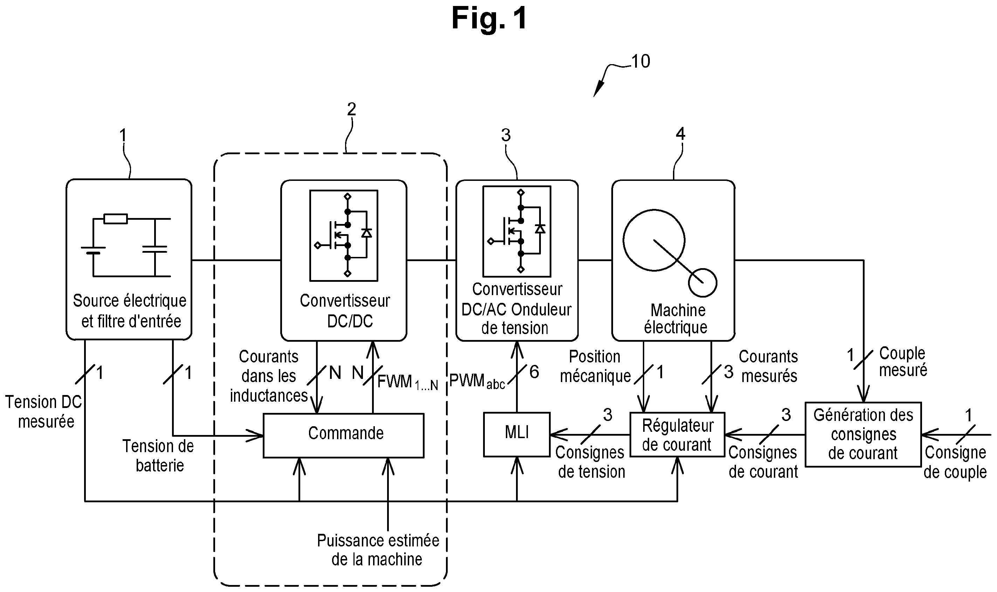

Dans le domaine des véhicules automobiles, hybrides ou électriques, il est connu d'employer des convertisseurs Boost 2 dans un ensemble électrique 10 comprenant une machine électrique 4 de traction, telle que représentée en figure 1.

Dans un tel ensemble électrique 10 le convertisseur *Boost* 2 est placé en amont de l'onduleur de tension 3 et de la machine électrique 4, considérés comme étant une source de courant dynamique.

Le convertisseur *Boost* 2 est toutefois positionné en aval de la source électrique 1 et des filtres d'entrées.

Un convertisseur Boost 2 est un convertisseur de type DC-DC. Il a donc pour objectif de fournir à la charge qu'il alimente, une tension continue supérieure ou égale à celle mesurée en entrée.

Ce type de convertisseur est un système à phase non minimale. En effet, la fonction de transfert qui relie la tension de sortie à la commande, notée H(s), présente dans le plan complexe, un zéro ayant une partie réelle positive.

D'après un développement en modèle petits signaux et linéarisation autour d'un point de fonctionnement stabilisé donné, la fonction de transfert H(s) a la forme suivante :

$$H(s) = \frac{\tilde{v}_{out}}{\tilde{d}} = \frac{(s-z_1)}{(s-p_1)(s-p_2)}$$

Avec $z_1>0, p_1<0$ et $p_2<0$ sont le zéro et les pôles de la fonction de transfert H(s) respectivement.

D'autre part, un convertisseur Boost 2 est un système à phase non minimale qui présente une réponse en sortie qui est initialement inverse à la variation de l'entrée. La sortie a tendance à diverger avant de converger vers le point stabilisé. On parle d'une phase de décrochage de la tension de sortie. De plus, les relations entre, d'une part, ses différents états et, d'autre part, la commande est non-linéaire.

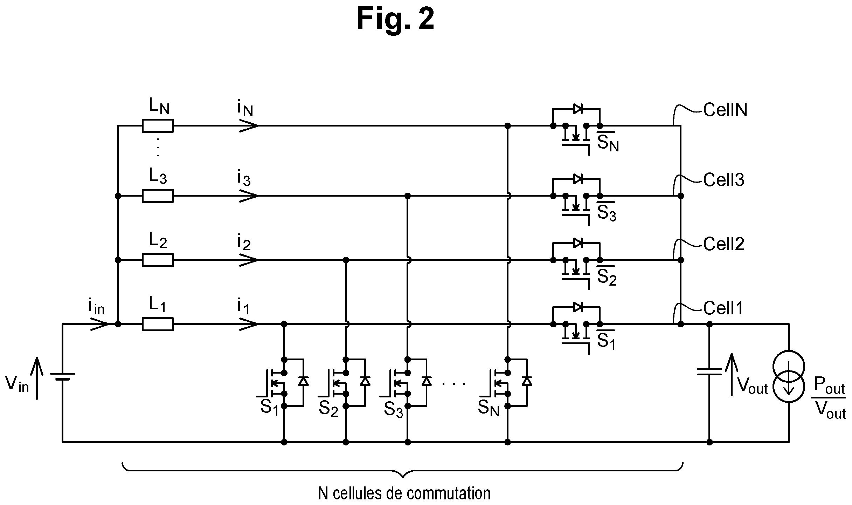

Aussi un problème général est de commander de manière stable et rapide, les convertisseurs *Boost à* N cellules de commutation $Cell_1$-$Cell_N$, avec N un entier naturel non nul, en particulier un convertisseur *Boost* de type synchrone, tel que représenté en figure 2, dans lequel les cellules de commutation sont composées de semi-conducteurs, par exemple des MOSFETS, par opposition au convertisseur Boost passif comprenant des diodes.

On connaît notamment de l'art antérieur le document US2017/0257038A1 qui décrit un procédé de commande d'un convertisseur *Boost* à N phases, avec N un entier naturel non nul. Ce procédé vise à modifier la fréquence de découpage du système et rajoute un déphasage entre les commandes des différentes cellules afin d'éviter la fréquence de résonance du bus continu. Toutefois une telle solution ne permet pas d'obtenir une commande à la fois stable, dynamique et rapide. On connaît également le document suivant qui divulgue des convertisseurs DC-DC de type boost: H. Renaudineau et al., "Efficiency Optimization Through Current-Sharing for Paralleled DC-DC Boost Converters With Parameter Estimation," in IEEE Transactions on Power Electronics, vol. 29, no. 2, pp. 759-767, Feb. 2014, doi: 10.1109/TPEL.2013.2256369.

Aussi, l'invention vise à rendre plus stable et plus rapide la commande d'un convertisseur *Boost,* et plus particulièrement d'un convertisseur Boost synchrone.

A cet effet, on propose un procédé de commande d'un convertisseur *Boost* synchrone à N cellules de commutation, dans lequel N est un entier naturel non nul, ledit convertisseur *Boost* recevant en entrée une tension électrique continue d'une source de tension et fournissant à une charge dynamique en sortie une tension de sortie supérieure ou égale à la tension d'entrée, le procédé comprenant :

- Une étape d'acquisition des valeurs de mesure desdites tensions d'entrée et de sortie ;
- Une étape d'acquisition des courants d'entrée mesurés dans chaque cellule de commutation ;

Le procédé comprenant aussi :

- Une étape d'estimation d'erreur en énergie totale dans ledit convertisseur Boost, en fonction de ladite tension d'entrée, de ladite tension de sortie et desdits courants d'entrée mesurés ;
- Une étape d'estimation de la variation d'une valeur de puissance en sortie du convertisseur Boost en fonction de ladite estimation d'erreur en énergie totale dans laquelle on estime la valeur de ladite puissance de la charge dynamique en sortie du convertisseur Boost (2) par régulation proportionnelle-intégrale sur ladite estimation d'erreur en énergie totale ;

- Une étape d'estimation d'une valeur de ladite puissance de la charge dynamique en sortie du convertisseur Boost en fonction de ladite estimation de la variation de la valeur de puissance de la charge dynamique en sortie ;
- Une étape de calcul de la consigne de courant pour chaque cellule de commutation, en fonction de ladite valeur de ladite puissance de la charge dynamique en sortie ; et
- Une étape de commande de chaque cellule de commutation en fonction de ladite consigne de courant calculée,

ladite étape d'estimation d'erreur en énergie totale ($\varphi$) dans ledit convertisseur Boost (2) étant en outre fonction de la différence entre la puissance en entrée avec la puissance de la charge dynamique en sortie ($P_{out}$) du convertisseur Boost (2) et fonction d'un vecteur de sortie (y) définissant une représentation linéaire dudit convertisseur Boost, l'erreur en énergie totale étant calculée selon l'équation suivante :

$$\varphi = \left\{ \int_\tau \underbrace{\left( V_{in} i_{in} - \hat{P}_{out} \right)}_{\hat{\dot{y}}} d\tau \right\} - y$$

dans laquelle la Vin est la tension d'entrée, iin le courant en entrée tel que Vin*iin représente la puissance totale absorbé par le convertisseur, Pout est la puissance de la charge dynamique raccordée au convertisseur Boost (2) en sortie, y est le vecteur de sortie définissant une représentation linéaire dudit convertisseur Boost et représentant l'énergie emmagasinée dans le système,
ledit vecteur de sortie (y) est calculé en fonction d'une somme discrète, pour chaque cellule de commutation, du produit entre la valeur d'inductance de ladite cellule de commutation (Cell1 -CellN ) et du carré du courant d'entrée mesuré dans ladite cellule de commutation (Cell1 -CellN ) correspondante, et en fonction du produit d'une valeur de capacité de sortie du convertisseur Boost (2) avec le carré de ladite tension de sortie.

Ainsi, le procédé permet d'obtenir une commande pour laquelle la puissance estimée converge vers la puissance totale en entrée du convertisseur de puissance.
Par ce procédé, on peut réguler la tension de sortie du convertisseur *Boost* à une tension de consigne imposée par un utilisateur tout en assurant une relativement bonne stabilité du système et en optimisant la réactivité et la dynamique de la commande vis-à-vis des perturbations extérieures.
Ainsi on peut obtenir une valeur d'estimation à convergence relativement rapide et stable.
Avantageusement et de manière non limitative, on estime la valeur de ladite puissance de la charge dynamique en sortie ($P_{out}$) du convertisseur Boost par régulation proportionnelle-intégrale sur ladite estimation d'erreur en énergie totale. Ainsi on peut obtenir une valeur d'estimation à convergence relativement rapide et stable.
Avantageusement et de manière non limitative, ladite étape d'estimation d'erreur en énergie totale dans ledit convertisseur Boost est fonction de la différence entre la puissance en entrée avec la puissance de la charge dynamique en sortie du convertisseur Boost et fonction d'un vecteur de sortie définissant une représentation linéaire dudit convertisseur Boost. Ainsi, on peut obtenir une estimation d'erreur en énergie totale relativement fiable.
Ainsi, on peut déterminer de manière relativement rapide et fiable le vecteur de sortie formant linéarisation du convertisseur Boost.
L'invention concerne aussi un ensemble électrique comprenant une source électrique de courant continu, un convertisseur Boost à N cellules de commutation, un convertisseur de tension continu-alternatif, une machine électrique, et un dispositif de commande dudit convertisseur Boost adapté pour mettre en œuvre un procédé tel que décrit précédemment
L'invention concerne aussi un véhicule automobile comprenant un tel ensemble électrique.
D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

[Fig. 1] est une vue de principe d'un ensemble d'alimentation électrique selon l'invention;
[Fig. 2] est une vue schématique d'un convertisseur *Boost* à N phases, N étant un entier naturel non nul, ici supérieur à 3, commandé selon le premier mode de réalisation de l'invention
[Fig. 3] est une vue schématique pour une cellule de commutation du convertisseur Boost et des schémas équivalents pour chacun de ses modes de fonctionnement ;
[Fig. 4] est une vue synoptique de l'estimateur de la consigne du courant en entrée de chaque cellule de commutation du convertisseur Boost.

Dans un premier mode de réalisation de l'invention, en référence aux figures 1 à 4, on décrit un procédé de commande non-linéaire par linéarisation exacte avec retour d'état d'un convertisseur élévateur de tension à « *N* » cellules de commutation $Cell_1$-$Cell_N$.

En référence à la figure 2, chaque cellule de commutation $Cell_1$-$Cell_N$ comprend deux interrupteurs commandés $S_1$-$S_N$ et $\overline{S_1}$-$\overline{S_N}$ et une inductance $L_1$-$L_N$.

Ce procédé permet de compenser les non-linéarités que présente le système qu'on souhaite contrôler.

La forme de cette compensation est liée à la structure du système. A titre d'exemple, pour compenser un terme non-linéaire, noté $\vartheta(x)$, par une soustraction, le vecteur de commande u en entrée du système et le terme non-linéaire $\vartheta(x)$ doivent apparaitre ensemble sous forme d'une addition $u+\vartheta(x)$.

D'autre part, pour compenser $\vartheta(x)$, par une division, le vecteur de commande u et le terme non-linéaire doivent apparaître ensemble sous forme d'une multiplication $u\cdot\vartheta(x)$.

Les équations du convertisseur *Boost* 2 à N cellules de commutation sont les suivantes :

$$\begin{cases} C_{out}\frac{dV_{out}}{dt}=\left(1-\alpha_1\right)i_1+\left(1-\alpha_2\right)i_2+\cdots+\left(1-\alpha_N\right)i_N-\frac{P_{out}}{V_{out}} \\ L_1\frac{di_1}{dt}=V_{in}-\left(1-\alpha_1\right)V_{out} \\ L_2\frac{di_2}{dt}=V_{in}-\left(1-\alpha_2\right)V_{out} \\ \qquad\qquad\vdots \\ L_N\frac{di_N}{dt}=V_{in}-\left(1-\alpha_N\right)V_{out} \end{cases} \qquad (1)$$

L'équation (1) peut s'écrire sous la forme générique d'une équation non-linéaire affine suivante :

$$\frac{dX}{dt}=f(X,t)+g(X,t)\cdot u(t) \qquad (2)$$

Ainsi, l'équation (2) devient :

$$\begin{pmatrix} \frac{di_1}{dt} \\ \frac{di_2}{dt} \\ \vdots \\ \frac{di_N}{dt} \\ \frac{dV_{out}}{dt} \end{pmatrix} = \begin{pmatrix} \frac{V_{in}-V_{out}}{L_1} \\ \frac{V_{in}-V_{out}}{L_2} \\ \vdots \\ \frac{V_{in}-V_{out}}{L_N} \\ \frac{1}{C_{out}}\left(\sum_{k=1}^{N}i_k-\frac{P_{out}}{V_{out}}\right) \end{pmatrix} + \begin{pmatrix} \frac{V_{out}}{L_1} & 0 & \cdots & 0 \\ 0 & \frac{V_{out}}{L_2} & \cdots & 0 \\ 0 & 0 & \ddots & 0 \\ 0 & 0 & \cdots & \frac{V_{out}}{L_N} \\ -\frac{i_1}{C_{out}} & -\frac{i_2}{C_{out}} & \cdots & -\frac{i_N}{C_{out}} \end{pmatrix} \begin{pmatrix} \alpha_1 \\ \alpha_2 \\ \vdots \\ \alpha_N \end{pmatrix} \qquad (3)$$

avec

- $X\in R^n=(i_1\ i_2\ ...\ i_N\ V_{out})^t$ le vecteur des variables d'état du système,
- $u(t)=(\alpha_1\cdots\alpha_N)\in R^m$ représente le vecteur de commande considéré comme une entrée au système, $\alpha_k$ étant le rapport cyclique appliqué à l'interrupteur $S_k$ de la $k^{ième}$ cellule de commutation, et 1- $\alpha_k$ le rapport cyclique appliqué à l'interrupteur $\overline{S_k}$ de la kième cellule de commutation.
- $f(X)$ et $g(X)$ sont les des fonctions non linéaires indéfiniment dérivables ;
- $(L_1,L_2,...,L_N)$ et $C_{out}$ sont les inductances de chaque cellule de commutation et le condensateur en sortie du convertisseur *Boost* respectivement;
- $i_1$, $i_2$, ...,$i_N$ et $V_{out}$ sont les courants dans chaque inductance et la tension en sortie du convertisseur *Boost* 2 respectivement ;
- $P_{out}$ est la puissance de la charge dynamique raccordée au convertisseur *Boost* 2 en sortie.

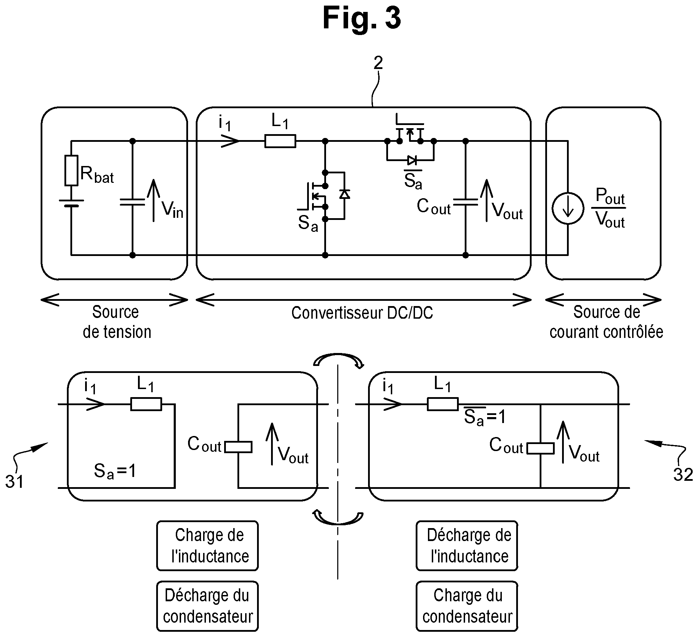

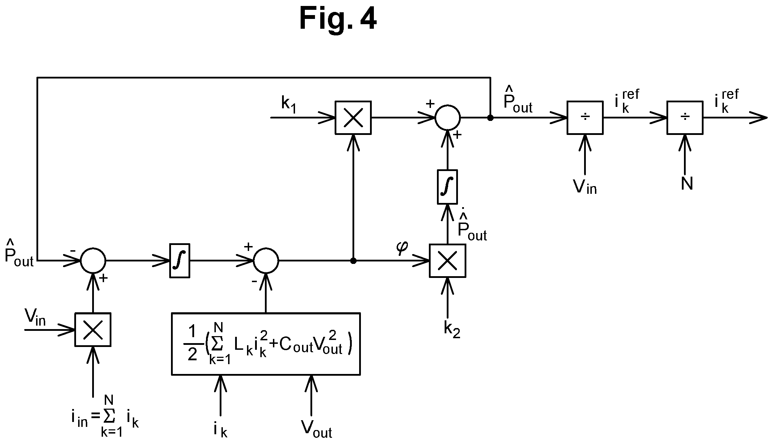

Dans la suite de la description, en référence aux figures 3 et 4, le convertisseur *Boost* 2 ne sera décrit que pour une seule cellule de commutation.

Le convertisseur *Boost 2, aussi appelé Boost 2,* présente deux modes de fonctionnement : un premier mode 31 dans lequel l'inductance $L_1$ du *Boost* 2 se charge tandis que le condensateur $C_{out}$ en sortie se décharge ; et un deuxième mode 32 dans lequel l'inductance $L_1$ du Boost 2 se décharge tandis que le condensateur $C_{out}$ en sortie se charge.

Le premier mode 31 est régi par les équations électriques suivantes :

$$\begin{cases} \dfrac{di_1}{dt} = \dfrac{V_{in}}{L_1} \\ \dfrac{dV_{out}}{dt} = -\dfrac{1}{C_{out}} \cdot \dfrac{P_{out}}{V_{out}} \end{cases} \qquad (4)$$

Concernant la variation énergétique dans ce premier mode 31, l'équation de l'énergie emmagasinée dans l'inductance est de la forme $E_L = \dfrac{1}{2} L_1 i_1^2$. Ainsi, la variation temporelle de cette dernière prend la forme suivante :

$$\dfrac{dE_L}{dt} = \dfrac{dE_L}{di_1} \cdot \dfrac{di_1}{dt} = V_{in} i_1 \qquad (5)$$

En outre, l'équation de l'énergie emmagasinée dans le condensateur est de la forme $E_C = \dfrac{1}{2} C_{out} V_{out}^2$. Ainsi, la variation temporelle de cette dernière prend la forme suivante :

$$\dfrac{dE_C}{dt} = \dfrac{dE_C}{dV_{out}} \cdot \dfrac{dV_{out}}{dt} = -V_{out} i_{out} \qquad (6)$$

Le deuxième mode 32 est régi par les équations électriques suivantes :

$$\begin{cases} \dfrac{di_1}{dt} = \dfrac{1}{L_1}\left(V_{in} - V_{out}\right) \\ \dfrac{dV_{out}}{dt} = \dfrac{1}{C_{out}}\left(i_1 - \dfrac{P_{out}}{V_{out}}\right) \end{cases} \qquad (7)$$

En termes de variation énergétique dans ce mode, on a :

- La variation temporelle de l'énergie emmagasinée dans l'inductance prend la forme suivante :

$$\dfrac{dE_L}{dt} = \dfrac{dE_L}{di_1}\dfrac{di_1}{dt} = \left(V_{in} - V_{out}\right)i_1 \qquad (8)$$

- La variation temporelle de l'énergie emmagasinée dans le condensateur en sortie prend la forme suivante :

$$\dfrac{dE_C}{dt} = \dfrac{dE_C}{dV_{out}} \cdot \dfrac{dV_{out}}{dt} = \left(i_1 - i_{out}\right)V_{out} \qquad (9)$$

Par conséquent, la variation de l'énergie totale emmagasinée dans le système, notée $E_t$, est la suivante :

$$\dfrac{dE_t}{dt} = \dfrac{d(E_L + E_C)}{dt} = V_{in} i_1 - P_{out} \qquad (10)$$

Et :

$$\dfrac{dE_t}{dt} = \text{pertes dans le système} \qquad (11)$$

De manière générale, le vecteur de sortie suivant permet une linéarisation globale du système pour le cas d'un convertisseur à N cellules de commutation :

$$y = h(X,t) = \frac{1}{2}\sum_{k=1}^{N} L_k i_k^2 + \frac{1}{2} C_{out} V_{out}^2 \qquad (12)$$

Une dérivée de premier ordre pour l'équation (12) donne l'équation suivante :

$$\dot{y} = \left[ V_{in} \sum_{k=1}^{N} i_k \right] - P_{out} \qquad (13)$$

Or l'équation (13), correspond à la variation de l'énergie totale dans le système en fonction du temps, qui représente les pertes dissipées par le convertisseur.

On cherche à estimer la consigne du courant total $i_{in}^{ref}$ absorbé par le convertisseur DC/DC. Or, pour un convertisseur de puissance de rendement $\eta$ et d'après le théorème de la conservation de la puissance on obtient :

$$\eta \left( \underbrace{V_{in} i_{in}}_{P_{in}} \right) = \underbrace{V_{out} i_{out}}_{P_{out}} \qquad (14)$$

Avec : $\eta = \frac{P_{out}}{P_{in}} \leq 1$ et $i_{in} = \sum_{k=1}^{N} i_k$ .

Ainsi, le courant en entrée devient égal à :

$$i_{in} = \frac{P_{in}}{V_{in}} = \frac{1}{\eta} \cdot \frac{P_{out}}{V_{in}} \qquad (15)$$

Soit le système d'équations suivant :

$$\begin{cases} \dot{P}_{out} = \sigma \\ \ddot{P}_{out} = \dot{\sigma} \end{cases} \qquad (16)$$

avec

$$P_{min} \leq P_{out} = \int \sigma \cdot d\tau \leq P_{max} \qquad (17)$$

On distingue les deux cas suivants :

- en régime transitoire : $\sigma \neq 0$ et $P_{out}$ est variable ;
- en régime stationnaire : $\sigma = 0$ et $P_{out}$ est constante

D'autre part, reprenons l'expression (13). Cette dernière est composée de deux termes :

Le premier terme $V_{in} \sum_{k=1}^{N} i_k = V_{in} i_{in}$ représente la puissance totale absorbée par le convertisseur. La tension d'entrée et le courant dans l'inductance sont deux variables mesurées physiquement à l'aide des capteurs. Ainsi, la puissance totale absorbée par le convertisseur est connue.

Le deuxième terme, $P_{out}$, représente la puissance utile absorbée par la charge. Cette dernière est non mesurée mais peut être estimée. Ainsi, elle est notée $\hat{P}_{out}$.

Partant de là, soit l'équation $\dot{\hat{y}}$ suivante :

$$\dot{\hat{y}} = V_{in} i_{in} - \hat{P}_{out} \qquad (18)$$

Ainsi, l'erreur d'estimation sera :

$$\dot{y}\text{-}\dot{\hat{y}}=\text{-}\left(P_{out}\text{-}\hat{P}_{out}\right) \qquad (19)$$

Quand $\left(\dot{y}\text{-}\dot{\hat{y}}\right) \to 0$ , on obtient :

$$\begin{cases} \hat{P}_{out} \to P_{out} \\ \dot{\hat{P}}_{out}=\hat{\sigma} \to \dot{P}_{out}=\sigma \\ \ddot{\hat{P}}_{out}=\dot{\hat{\sigma}} \to \ddot{P}_{out}=0 \end{cases} \qquad (20)$$

En exprimant l'équation $\begin{cases} \dot{P}_{out}=\sigma \\ \ddot{P}_{out}=\dot{\sigma} \end{cases}$ (16) en fonction de l'erreur d'estimation, on obtient :

$$\dot{\hat{P}}_{out}=\hat{\sigma}\text{-}k_1\left(\dot{y}\text{-}\dot{\hat{y}}\right) \qquad (21)$$

et

$$\ddot{\hat{P}}_{out}=\text{-}k_2\left(\dot{y}\text{-}\dot{\hat{y}}\right) \qquad (22)$$

avec $k_1$ et $k_2$ les gains de l'observateur à déterminer.
On remarque que ces équations prennent la forme d'un observateur de type Luenberger où est inclus le terme d'erreur d'estimation $\left(\dot{y}\text{-}\dot{\hat{y}}\right)$ .
L'objectif de ce terme c'est de conduire l'état estimé vers l'état réel au fil du temps.
Pour l'équation (22), et après un développement adéquat, on obtient :

$$\dot{\hat{P}}_{out}=k_2\left\{\underbrace{\int_\tau \underbrace{\left(V_{in}i_{in}\text{-}\hat{P}_{out}\right)}_{\hat{y}} d\tau \text{-}y}_{\varphi}\right\} \qquad (23)$$

Pour l'équation (21), et après un développement adéquat, on obtient :

$$\hat{P}_{out}=k_1\varphi+\underbrace{k_2\int_\tau \varphi \, d\tau}_{\hat{P}_{out}} \qquad (2)$$

avec

$$\varphi=\left\{\int_\tau \underbrace{\left(V_{in}i_{in}\text{-}\hat{P}_{out}\right)}_{\hat{y}} d\tau\right\}\text{-}y \qquad (25)$$

L'équation (25) représentant l'erreur en énergie totale dans le convertisseur de puissance, c'est-à-dire l'écart entre la sortie y et son estimée, y étant le vecteur représentant l'énergie emmagasinée dans le système.
L'équation (2) permet de déterminer que la puissance estimée est obtenue à l'aide d'un régulateur de type Proportionnel-Intégrale qui agit sur l'erreur $\varphi$.

En régime stabilisé, une convergence asymptotique stable de l'erreur $\varphi$ vers zéro implique le suivant :

$$\left\{\int_\tau \left(V_{in}i_{in}-\widehat{P}_{out}\right)d\tau\right\} \xrightarrow{\text{en régime stabilisé}} y \qquad (26)$$

avec $y = \frac{1}{2}\sum_{k=1}^N L_k i_k^2 + \frac{1}{2}C_{out}V_{out}^2 = cte \neq 0$ .

Aussi, pour un point de fonctionnement donné :

$$\int_\tau \left(V_{in}i_{in}-\widehat{P}_{out}\right)d\tau \xrightarrow{\text{en régime stabilisé}} cte \neq 0 \qquad (27)$$

La dérivée de l'équation (27) implique :

$$V_{in}i_{in}-\widehat{P}_{out} \xrightarrow{\text{en régime stabilisé}} 0 \qquad (3)$$

Et par conséquent :

$$\boxed{\widehat{P}_{out} \xrightarrow{\text{en régime stabilisé}} V_{in}i_{in}=P_{in}} \qquad (29)$$

Par cette approche, la puissance estimée converge vers la puissance totale en entrée, qui est absorbée par le convertisseur de puissance.

Ainsi, la notion de rendement du système disparaît avec cette approche et le courant de consigne en entrée converge vers l'expression suivante :

$$i_{in}^{ref} \xrightarrow{\text{en régime stabilisé}} \frac{P_{in}}{V_{in}} \qquad (30)$$

Par suite, le courant de consigne dans chaque cellule « k » de commutation est égal à :

$$\boxed{i_k^{ref} = \frac{i_{in}^{ref}}{N}} \qquad (31)$$

Les gains $k_1$ et $k_2$ de l'observateur sont alors déterminés à partir de l'équation $\begin{cases} k_1 = 2\xi w_n \\ k_2 = w_n^2 \end{cases}$ (32) suivante :

$$\begin{cases} k_1 = 2\xi w_n \\ k_2 = w_n^2 \end{cases} \qquad (32)$$

Avec $w_n = 2\pi f_n$ (la bande passante de l'estimateur) avec $f_n = [100Hz\ ;600Hz]$ par exemple et $\xi > 0$ (facteur d'amortissement).

Une convergence asymptotique stable de l'erreur $\varphi$ vers zéro est alors obtenue pour les valeurs de $k_1$ et $k_2$ positives.

**Revendications**

**1.** Procédé de commande d'un convertisseur *Boost* (2) synchrone à N cellules de commutation (Cell$_1$-Cell$_N$), dans

lequel N est un entier naturel non nul, ledit convertisseur *Boost (2)* recevant en entrée une tension électrique ($V_{in}$) continue d'une source de tension et fournissant à une charge dynamique en sortie une tension de sortie ($V_{out}$) supérieure ou égale à la tension d'entrée ($V_{in}$), le procédé comprenant :

- Une étape d'acquisition des valeurs de mesure desdites tensions d'entrée ($V_{in}$) et de sortie ($V_{out}$) ;
- Une étape d'acquisition des courants d'entrée mesurés dans chaque cellule de commutation ;
- Une étape d'estimation d'erreur en énergie totale ($\varphi$) dans ledit convertisseur Boost (2), en fonction de ladite tension d'entrée, de ladite tension de sortie et desdits courants d'entrée mesurés ;
- Une étape d'estimation de la variation d'une valeur de puissance de la charge dynamique en sortie ($P_{out}$) du convertisseur Boost en fonction de ladite estimation d'erreur en énergie totale ($\varphi$);
- Une étape d'estimation d'une valeur de ladite puissance de la charge dynamique en sortie (Pout) du convertisseur Boost en fonction de ladite estimation d'erreur en énergie totale ($\varphi$) dans laquelle on estime la valeur de ladite puissance de la charge dynamique en sortie du convertisseur Boost (2) par régulation proportionnelle-intégrale sur ladite estimation d'erreur en énergie totale ;
- Une étape de calcul de la consigne de courant pour chaque cellule de commutation ($Cell_1$-$Cell_N$), en fonction de ladite valeur de ladite puissance de la charge dynamique en sortie ($P_{out}$) ; et
- Une étape de commande de chaque cellule de commutation ($Cell_1$-$Cell_N$) en fonction de ladite consigne de courant calculée ;

ladite étape d'estimation d'erreur en énergie totale ($\varphi$) dans ledit convertisseur Boost (2) étant en outre fonction de la différence entre la puissance en entrée avec la puissance de la charge dynamique en sortie ($P_{out}$) du convertisseur Boost (2) et fonction d'un vecteur de sortie (y) définissant une représentation linéaire dudit convertisseur Boost,

l'erreur en énergie totale étant calculée selon l'équation suivante :

$$\varphi = \left\{ \int_{\tau} \underbrace{\frac{\left(V_{in}i_{in} - \bar{P}_{out}\right)}{}}_{\hat{y}} d\tau \right\} - y$$

dans laquelle Vin est la tension d'entrée, iin le courant en entrée tel que Vin*iin représente la puissance totale absorbé par le convertisseur, Pout est la puissance de la charge dynamique raccordée au convertisseur Boost (2) en sortie, y est le vecteur de sortie définissant une représentation linéaire dudit convertisseur Boost et représentant l'énergie emmagasinée dans le système,

ledit vecteur de sortie (y) est calculé en fonction d'une somme discrète, pour chaque cellule de commutation, du produit entre la valeur d'inductance de ladite cellule de commutation (Cell1 -CellN ) et du carré du courant d'entrée mesuré dans ladite cellule de commutation (Cell1 -CellN ) correspondante, et en fonction du produit d'une valeur de capacité de sortie du convertisseur Boost (2) avec le carré de ladite tension de sortie.

2. Procédé selon la revendication 1, **caractérisé en ce qu'**on estime la variation d'une valeur de puissance de la charge dynamique en sortie ($P_{out}$) du convertisseur Boost par régulation proportionnelle sur ladite estimation d'erreur en énergie totale.

3. Ensemble électrique (10) comprenant une source électrique de courant continu (1), un convertisseur Boost (2) à N cellules de commutation, un convertisseur de tension continu-alternatif (3), une machine électrique (4), et un dispositif de commande dudit convertisseur Boost adapté pour mettre en œuvre un procédé selon l'une quelconque des revendications 1 à 2.

4. Véhicule automobile comprenant un ensemble électrique (10) selon la revendication 3.

**Patentansprüche**

1. Verfahren zur Steuerung eines synchronen Aufwärtswandlers (2) mit N Schaltzellen ($Cell_1$-$Cell_N$), wobei N eine natürliche ganze Zahl ungleich null ist, wobei der Aufwärtswandler (2) im Eingang eine elektrische Gleichspannung ($V_{in}$) von einer Spannungsquelle erhält und an eine dynamische Last im Ausgang eine Ausgangsspannung ($V_{out}$) abgibt, die größer oder gleich der Eingangsspannung ($V_{in}$) ist, das Verfahren umfassend:

- Einen Schritt des Erfassens der Messwerte der Eingangsspannung ($V_{in}$) *und* der Ausgangsspannung ($V_{out}$);

- Einen Schritt des Erfassens der Eingangsströme, die in jeder Schaltzelle gemessen werden;
- Einen Schritt des Schätzens eines Gesamtenergiefehlers ($\varphi$) in dem Aufwärtswandler (2) in Abhängigkeit von der Eingangsspannung, von der Ausgangsspannung und von den Eingangsströmen, die gemessen werden;
- Einen Schritt des Schätzens der Änderung eines Leistungswerts der dynamischen Last im Ausgang ($P_{out}$) des Aufwärtswandlers in Abhängigkeit von der Schätzung eines Gesamtenergiefehlers ($\varphi$);
- Einen Schritt des Schätzens eines Wert der Leistung der dynamischen Last im Ausgang ($P_{out}$) des Aufwärtswandlers in Abhängigkeit von der Schätzung eines Gesamtenergiefehlers ($\varphi$), wobei der Wert der Leistung der dynamischen Last im Ausgang des Aufwärtswandlers (2) durch Proportional-Integral-Regelung an der Schätzung eines Gesamtenergiefehlers geschätzt wird;
- Einen Schritt des Berechnens des Stromsollwerts für jede Schaltzelle (Cell$_1$-Cell$_N$) in Abhängigkeit von dem Wert der Leistung der dynamischen Last im Ausgang ($P_{out}$); und
- Einen Schritt des Steuerns jeder Schaltzelle (Cell$_1$-Cell$_N$) in Abhängigkeit von dem berechneten Stromsollwert; wobei der Schritt des Schätzens eines Gesamtenergiefehlers ($\varphi$) in dem Aufwärtswandler (2) ferner abhängig von der Differenz zwischen der Leistung im Eingang und der Leistung der dynamischen Last im Ausgang ($P_{out}$) des Aufwärtswandlers (2) ist und abhängig von einem Ausgangsvektor (y) ist, der eine lineare Darstellung des Aufwärtswandlers definiert,

wobei der Gesamtenergiefehler nach der folgenden Gleichung berechnet wird:

$$\varphi = \left\{ \int_{\tau} \frac{(V_{in} i_{in} - \hat{P}_{out})}{\hat{y}} \, d\tau \right\} - y$$

in der Vin die Eingangsspannung ist, iin der Eingangsstrom, so dass Vin*iin die von dem Wandler aufgenommene Gesamtleistung darstellt, Pout die Leistung der an den Aufwärtswandler (2) im Ausgang angeschlossenen dynamischen Last ist, y der Ausgangsvektor ist, der eine lineare Darstellung des Aufwärtswandlers definiert und die in dem System gespeicherte Energie darstellt,

der Ausgangsvektor (y) in Abhängigkeit von einer diskreten Summe, für jede Schaltzelle, des Produkts aus dem Induktivitätswert der Schaltzelle (Cell1 -CellN) und dem Quadrat des in der entsprechenden Schaltzelle (Cell1 -CellN) gemessenen Eingangsstroms und in Abhängigkeit von dem Produkt aus einem Ausgangskapazitätswert des Aufwärtswandlers (2) und dem Quadrat der Ausgangsspannung berechnet wird.

2. Verfahren nach Anspruch 1, **dadurch gekennzeichnet, dass** man die Änderung eines Leistungswerts der dynamischen Last im Ausgang ($P_{out}$) des Aufwärtswandlers durch Proportional-Regelung an der Schätzung eines Gesamtenergiefehlers schätzt.

3. Elektrische Anordnung (10), umfassend eine elektrische Gleichstromquelle (1), einen Aufwärtswandler (2) mit N Schaltzellen, einen Gleich-/Wechselspannungswandler (3), eine elektrische Maschine (4) und eine Vorrichtung zur Steuerung des Aufwärtswandlers, die geeignet ist, ein Verfahren nach einem der Ansprüche 1 bis 2 durchzuführen.

4. Kraftfahrzeug, das eine elektrische Anordnung (10) nach Anspruch 3 umfasst.

**Claims**

1. Method for controlling a synchronous *boost* converter (2) with N switching cells (Cell$_1$-Cell$_N$), in which N is a nonzero natural number, said *boost* converter (2) receiving at the input a DC electric voltage ($V_{in}$) from a voltage source and providing to a dynamic load, at the output, an output voltage ($V_{out}$) greater than or equal to the input voltage ($V_{in}$), the method comprising:

- a step for acquiring values of the measurements of said input ($V_{in}$) *and* output ($V_{out}$) voltages;
- a step for acquiring input currents measured in each switching cell;
- a step for estimating the total energy error ($\varphi$) in said boost converter (2), as a function of said input voltage, said output voltage and said measured input currents;
- a step for estimating the variation in a power value ($P_{out}$) of the dynamic load at the output of the boost converter as a function of said estimate of the total energy error ($\varphi$);
- a step for estimating a value of said power ($P_{out}$) of the dynamic load at the output of the boost converter as a function of said estimate of the total energy error ($\varphi$) in which the value of said power of the dynamic load at the output of the boost converter (2) is estimated by proportional-integral control on said estimate of the total energy error;

- a step for calculating the current setpoint for each switching cell (Cell$_1$-Cell$_N$), as a function of said value of said power ($P_{out}$) of the dynamic load at the output; and
- a step for controlling each switching cell (Cell$_1$-Cell$_N$), as a function of said calculated current setpoint;

said step for estimating the total energy error ($\varphi$) in said boost converter (2) being additionally a function of the difference between the input power and the power ($P_{out}$) of the dynamic load at the output of the boost converter (2) and a function of an output vector (y) defining a linear representation of said boost converter, the total energy error being calculated according to the following equation:

$$\varphi = \left\{ \int_{\tau} \underbrace{\left( V_{in} i_{in} - \hat{P}_{out} \right)}_{\hat{y}} \, d\tau \right\} \cdot y$$

in which Vin is the input voltage and iin is the input current such that Vin*iin represents the total power absorbed by the converter, Pout is the power of the dynamic load connected to the boost converter (2) at the output, y is the output vector defining a linear representation of said boost converter and representing the energy stored in the system,

said output vector (y) is calculated as a function of a discrete sum, for each switching cell, of the product of the inductance value of said switching cell (Cell1-CellN) and the square of the input current measured in said corresponding switching cell (Cell1-CellN), and as a function of the product of an output capacitance value of the boost converter (2) and the square of said output voltage.

2. Method according to Claim 1, **characterized in that** the variation in a power value ($P_{out}$) of the dynamic load at the output of the boost converter is estimated by proportional control on said estimate of the total energy error.

3. Electrical assembly (10) comprising a DC electric source (1), a boost converter (2) with N switching cells, a DC/AC voltage converter (3), an electric machine (4), and a control device for said boost converter suitable for implementing a method according to either one of Claims 1 and 2.

4. Motor vehicle comprising an electrical assembly (10) according to Claim 3.

# Fig. 1

Fig. 2

N cellules de commutation

# Fig. 3

2

| i₁ | L₁ | | | Sₐ̄ |
|---|---|---|---|---|

$R_{bat}$   $V_{in}$   $S_a$   $C_{out}$   $V_{out}$   $\dfrac{P_{out}}{V_{out}}$

Source de tension | Convertisseur DC/DC | Source de courant contrôlée

31

$i_1$   $L_1$   $S_a=1$   $C_{out}$   $V_{out}$

32

$i_1$   $L_1$   $\overline{S_a}=1$   $C_{out}$   $V_{out}$

Charge de l'inductance

Décharge du condensateur

Décharge de l'inductance

Charge du condensateur

EP 3 918 703 B1

# Fig. 4

EP 3 918 703 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20170257038 A1

**Littérature non-brevet citée dans la description**

- **H. RENAUDINEAU et al.** Efficiency Optimization Through Current-Sharing for Paralleled DC-DC Boost Converters With Parameter Estimation. *IEEE Transactions on Power Electronics*, February 2014, vol. 29 (2), 759-767